**Europäisches Patentamt**

**European Patent Office**

**Office européen des brevets**

(19)

(11) Veröffentlichungsnummer: **0 249 207 B1**

# EUROPÄISCHE PATENTSCHRIFT

(12)

(45) Veröffentlichungstag der Patentschrift: 07.08.91

(51) Int. Cl.⁵: **B60G 17/04**

(21) Anmeldenummer: 87108369.7

(22) Anmeldetag: **10.06.87**

(54) **Niveauregeleinrichtung für Kraftfahrzeuge.**

(30) Priorität: **12.06.86 DE 3619777**

(43) Veröffentlichungstag der Anmeldung:
**16.12.87 Patentblatt 87/51**

(45) Bekanntmachung des Hinweises auf die
Patenterteilung:
**07.08.91 Patentblatt 91/32**

(84) Benannte Vertragsstaaten:
**DE FR GB IT SE**

(56) Entgegenhaltungen:
EP-A- 0 033 204      EP-A- 0 039 181
EP-A- 0 114 700      EP-A- 0 143 984
EP-A- 0 223 098      FR-A- 1 383 577
FR-A- 2 138 114      GB-A- 2 028 513
GB-A- 2 159 107      US-A- 4 349 077
US-A- 4 401 310

ATZ AUTOMOBILTECHNISCHE ZEITSCHRIFT,
Band 81, Nr. 11, 1979, Seiten 559-566; G.
HEYER: "Zum Entwicklungsstand hydropneumatischer Niveauregelanlagen im Personenwagen"

AUTOMOBILTECHNISCHE ZEITSCHRIFT,
Band 73, Nr. 2, 1971, Seiten 49-55; F. TUCZEK
et al.: "Möglichkeiten der Niveauregelung einer Personenwagenachse mit hydropneumatischer Federung"

(73) Patentinhaber: **Gesellschaft für Hydraulik-
Zubehör mbH
Industriestrasse
W-6603 Sulzbach/Saar(DE)**

(72) Erfinder: **Baldauf, Karl-Eberhard, Dipl.-Ing.
Bismarckstrasse 96
W-6600 Saarbrücken(DE)**

(74) Vertreter: **Patentanwälte Phys. Bartels
Dipl.-Ing. Fink Dr.-Ing. Held
Lange Strasse 51
W-7000 Stuttgart 1(DE)**

## Beschreibung

Die Erfindung betrifft eine Einrichtung zum Regeln des Niveaus der von hydropneumatischen Federungszylindern getragenen Teile eines Kraftfahrzeuges, welche die Merkmale des Oberbegriffs des Anspruches 1 aufweist.

Bei einer bekannten Niveauregleinrichtung für Fahrzeuge (US-A-4 349 077) erzeugt ein Niveausensor, in dem ein vorbestimmter Niveauwert gespeichert ist, ein erstes Signal, wenn das Niveau über diesem vorbestimmten Wert liegt, und ein zweites Signal, wenn es unterhalb dieses vorbestimmten Wertes liegt. Verzögerungsschaltungen einer dem Niveausensor nachgeschalteten Signalverarbeitungsstufe bewirken, daß die Signale des Niveausensors erst mit zeitlicher Verzögerung wirksam werden und daß dementsprechend verzögert Ventile geschaltet werden, mittels deren ein Anheben des Niveaus und ein Absenken des Niveaus bewirkt wird. Da jede Abweichung von dem im Niveausensor gespeicherten Sollwert einen Regelvorgang auslöst, wird das Niveau häufig korrigiert, was zu unerwünschten Schwingungen der Fahrzeugkarosserie führen kann.

Zur Beseitigung dieses Nachteiles ist es bekannt (US-A-4 401 310, FR-A-2 138 114) den Niveausensor so auszubilden, daß er nur dann ein Signal erzeugt, das einen Regelvorgang auslöst, wenn ein oberer Grenzwert des Sollwertbereiches nach oben und ein unterer Grenzwert des Sollwertbereiches nach unten überschritten werden. Der Niveausensor kann dann aus zwei Schaltern bestehen (FR-A-2 138 114), die mit ihrer Schaltschwelle den oberen bzw. unteren Grenzwert des Sollwertbereiches definieren. Mit Hilfe einer Verzögerungsschaltung in der dem Niveausensor nachgeschalteten Signalverarbeitungsstufe wird dabei erreicht, daß Niveauänderungen der Fahrzeugkarosserie infolge von Unebenheiten der Fahrbahn keinen Regelvorgang auslösen. Der Vorteil eines Sollwertbereiches, der durch die Schaltschwellen von zwei Schaltern begrenzt ist, was zu einem kostengünstigen und störunanfälligen Niveausensor führt, wird jedoch mit dem Nachteil erkauft, daß die Abweichung des Niveaus von einem bestimmten Sollwert, beispielsweise dem Mittelwert zwischen der oberen und unteren Grenze des Sollwertbereiches, verhältnismäßig groß sein kann.

Der Erfindung liegt daher die Aufgabe zugrunde, eine Einrichtung zum Regeln des Niveaus der von hydropneumatischen Federungszylindern getragenen Teile eines Kraftfahrzeuges zu schaffen, die sich mit einem geringen Aufwand realisieren läßt und trotzdem zu geringen Regelabweichungen führt.

Diese Aufgabe löst eine Einrichtung mit den Merkmalen des Anspruches 1.

Da die Nachlaufschaltung in der Signalverarbeitungsstufe deren Ausgangssignal für eine vorbestimmte Zeit noch aufrecht-erhält, auch wenn das vom Niveausensor gelieferte Eingangssignal beim Unterschreiten der oberen Grenze und beim Überschreiten der unteren Grenze des Sollwertbereiches wegfällt, wird die Niveauänderung noch für die Nachlaufzeit fortgesetzt. Es bedarf deshalb nur der passenden Festsetzung der Nachlaufzeit, um die Niveauänderung in der Mitte zwischen der oberen und der unteren Schaltschwelle zu beenden. Durch die Nachlaufzeit lassen sich auch Schwingungs- oder Flattererscheinungen, welche durch die Schalter verursacht werden können, in einfacher Weise unterdrücken.

Bei einer bevorzugten Ausführungsform sind die Ventile als Sitzventile ausgebildet. Dies verringert nicht nur den Aufwand für die Ventile, sondern ermöglicht auch den Einsatz kleinerer Pumpen, da diese nicht mehr wie bei den Dreiwegeventilen die Undichtheit in der Mittellage kompensieren müssen. Hinzu kommt der weitere Vorteil, daß ein Absinken der Karosserie bei abgestelltem Motor vermieden ist.

Vorzugsweise sind die Schalter der Niveausensoren als Näherungsschalter ausgebildet, da diese verschleißfrei arbeiten und daher robust sind.

Mit der erfindungsgemäßen Einrichtung läßt sich, was an sich bekannt ist (EP-A- 0 033 204), das Fahrzeug auch bei Kurvenfahrt stabilisieren, sofern auf beiden Fahrzeugseiten wenigstens ein Niveausensor und wenigstens ein Hydraulikzylinder angeordnet sind. Für eine derartige Stabilisierung wäre allerdings das durch die Verzögerungsschaltungen bedingte verzögerte Ansprechen der Niveauregelung nachteilig. Bei einer bevorzugten Ausführungsform ist deshalb eine Logikschaltung mit Eingängen für die Signale der den beiden Fahrzeugseiten zugeordneten Niveausensoren vorgesehen, mittels deren die Signalverarbeitungsstufen beeinflußt werden können. Mit Hilfe dieser Logikschaltung kann die Verzögerungszeit der Verzögerungsschaltungen verändert, insbesondere verkürzt oder vollständig ausgeschaltet werden.

Aber auch andere Aufgaben, insbesondere solche, welche eine schnelle Signalverarbeitung erforderlich machen, lassen sich mit einer derartigen Logikschaltung erfüllen. Beispielsweise können mit ihr zusätzliche Ventile geschaltet werden, welche den Ventilen in den Zuflußleitungen und Abflußleitungen der den beiden Fahrzeugseiten zugeordneten Hydraulikzylinder parallel geschaltet sind, um beispielsweise bei einer Kurvenfahrt am Kurveneingang und Kurvenausgang die Niveauregelung besonders schnell wirksam werden lassen zu können. Eine andere Möglichkiet der Logikschaltung besteht darin, situationsbedingt die Dämpfung der Kolbenbewegung der Hyraulikzylinder mit Hilfe von Ventilen zu verändern, die in den Verbindungsleitungen zwischen Hydraulikzylinder und zugeordnetem Federspeicher liegen.

Vorteilhafterweise ist eine Steuerungsschaltung vorgesehen, welche im Wechsel wenigstens für eine Achse diejenigen Ventile für eine gewisse Zeitspanne im Sinne des Öffnens ansteuert, die bei einer Niveauanhebung zu öffnen sind. Handelt es sich beispielsweise um ein Lastfahrzeug, das im abgesenkten Zustand mit ungleicher Lastverteilung beladen worden ist, dann kann mit Hilfe einer solchen Steuerschaltung vermieden werden, daß die Karosserie auf der weniger belasteten Seite schneller angehoben wird und dadurch die Gefahr einer Lastverschiebung noch verstärkt. Durch das im Wechsel erfolgende Öffnen der Ventile wird nämlich sichergestellt, daß die Karosserie auf beiden Seiten in gleich großen Schritten auf das Normalniveau angehoben wird. Selbstverständlich können in diese schrittweise Niveauanhebung die Hydraulikzylinder aller Achsen einbezogen sein. Ferner kann man mittels einer derartigen Steuerschaltung das Niveau auch schrittweise absenken, da hierzu nur die die Niveauabsenkung steuernden Ventile im Wechsel für eine gewissen Zeitspanne geöffnet zu werden brauchen.

Diese Steuerschaltung ist vorzugsweise in der Logikschaltung enthalten. Man kann dann beispielsweise die Verzögerungsschaltungen mit den Schaltbefehlen beaufschalgen und gleichzeitig die Verzögerungszeit von der Logikschaltung aus auf den gewünschten Wert reduzieren.

Im folgenden ist die Erfindung anhand eines in der Zeichnung dargestellten Ausführungsbeispiels im einzelnen erläutert.

Es zeigen

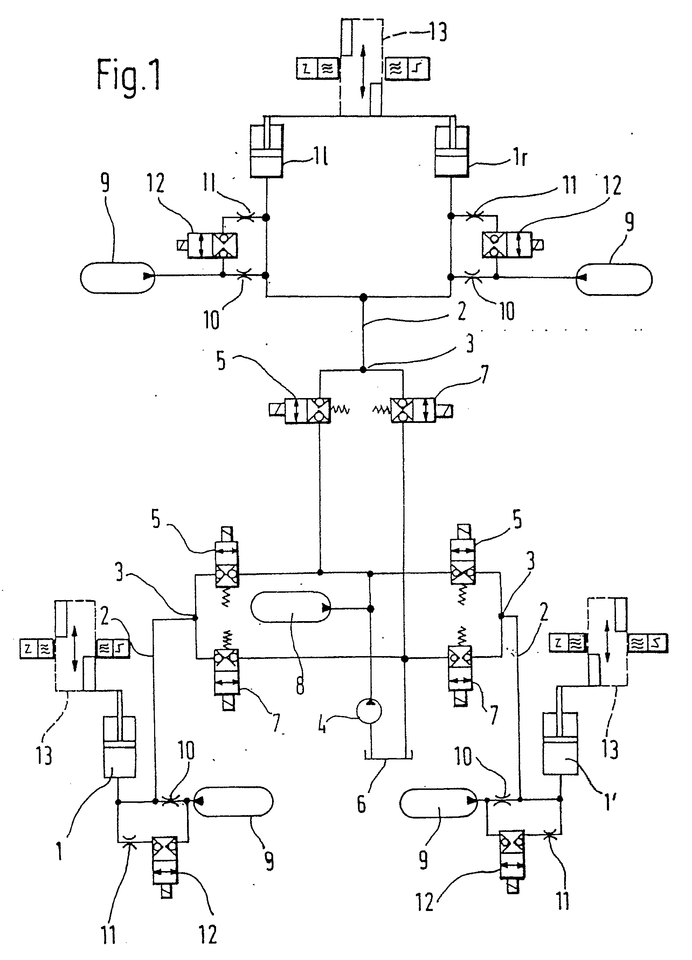

Fig. 1 den Hydraulikschaltplan des Ausführungsbeispiels,

Fig. 2 ein elektrisches Blockschaltbild des Ausführungsbeispiels.

Die hydropneumatische Federung eines in bekannter Weise ausgebildeten und daher nicht dargestellten Kraftfahrzeuges, z. B. eines Schwerlastfahrzeuges, weist Hyraulikzylinder 1, 1', sowie 1l und 1r auf. Die abzufedernden Teile des Fahrzeuges sind über die Hydraulikzylinder 1 und 1'auf dessen einer Achse und über die Hydraulikzylinder 1l und 1r auf dessen anderer Achse abgestützt.

Von jedem dieser Hydraulikzylinder führt eine Rohrleitung 2 zu einer Verzweigungsstelle 3. Von hier aus führt für die Hyraulikzylinder 1 und 1' je eine, für die Hydraulikzylinder 1l und 1r eine gemeinsame erste Rohrleitung zu einer Pumpe 4. In jeder dieser ersten Rohrleitungen liegt ein mit einem elektromagentischen Antrieb ausgerüstetes erstes Sitzventil 5. Ferner führt von jeder Verzweigungsstelle 3 für die Hydraulikzylinder 1 und 1' je eine, für die Hydraulikzylinder 1l und 1r eine gemeinsame zweite Rohrleitung zu einem Tank 6. In jeder dieser zweiten Rohrleitungen ist ein zweites Sitzventil 7 angeordnet, das ebenfalls einen elektromagnetischen Antrieb hat. An einen allen ersten Rohrleitungen gemeinamen Abschnitt ist ferner ein Zentralspeicher 8 angeschlossen. Je ein Federspeicher 9 steht über eine Dämpfungseinrichtung 10 mit jeder der von den Hydraulikzylindern zu den Verteilungsstellen 3 führenden Rohrleitung in Verbindung. Parallel zu jeder Dämpfungseinrichtung 10 liegt die Reihenschaltung einer zweiten Dämpfungseinrichtung 11 und eines zusätzlichen Sitzventils 12 mit schnell schaltendem elektromagnetischem Antrieb.

Alle Sitzventile 5, 7 und 12 sind als Doppelsitzventile ausgebildet, um trotz der stark schwankenden Druckverläufe während der Federungsvorgänge Dichtheit in jeder Richtung zu gewährleisten. Damit ist auch ein Absinken der von den hydraulischen Zylindern 1, 1', 1l und 1r getragenen Teile während der Standzeiten, in denen die Pumpe 4 stillsteht, ausgeschlossen.

Jedem Hydraulikzylinder 1 und 1', sowie den beiden Hydraulikzylindern 1l und 1r ist je ein als Ganzes mit 13 bezeichneter Niveausensor in Form einer berührungslos arbeitenden Näherungsschaltergruppe zugeordnet. Im Ausführungsbeispiel weist jede dieser Näherungsschaltergruppen zwei Aufnehmer 14 auf, deren Schaltzustand davon abhängt, ob eine zugeordnete Fahne 15 sich außerhalb oder innerhalb des Schaltbereiches befindet. Die Fahnen 15 sind an Teilen festgelegt, welche relativ zu den Achsen des Fahrzeugs unbewegbar sind. Entsprechend sind die Aufnehmer 14 an Teilen festgelegt, die relativ zur Karosserie unbeweglich sind. Es wäre selbstversändlich auch möglich, die Aufnehmer relativ zu den Achsen und die Fahnen relativ zu der Karosserie unbeweglich anzuordnen.

Den beiden Aufnehmern 14 jedes Niveausensors 13 ist eine Signalverarbeitungsstufe 16 nachgeschaltet. Letztere enthält für jeden Aufnehmer 14 eine Verzögerungsschaltung 17, eine Nachlaufschaltung 18 und eine Endstufe 19. Der eine Aufnehmer 14 ist an die eine Verzögerungsschaltung 17, der andere Aufnehmer an den entsprechenden Eingang der anderen Verzögerungsschaltung 17 angeschlossen.

Die Wirkungsweise der Verzögerungsschaltung 17 ist mit einem monostabilen Flip-Flop vergleichbar, das einem sich selbst zurückstellenden Integrierglied nachgeschaltet ist. Gelangt an den Eingang der Verzögerungsschaltung 17 ein Signal des Aufnehmers 14, dann tritt nicht sofort am Ausgang der Verzögerungsschaltung 17 ein Ausgangssignal auf. Vielmehr ist erst nach der gewählten Verzögerungszeit die Ausgangsspannung des Integriergliedes auf die Triggerspannung des Flip-Flops angestiegen. Um zuverlässig zu verhindern, daß diejenigen Signale der Aufnehmer 14 zu Ausgangssignalen der Verzögerungsschaltungen 17 führen, welche auf Fahrbahnstöße und dergleichen zurückzuführen sind, ist eine Verzögerungszeit im Bereich von Sekunden erforderlich. Im Ausführungsbeispiel liegt deshalb die normalerweise wirksame Verzögerungszeit im Bereich zwischen 5 und 7 Sekunden. Signale der Aufnehmer von kürzerer Dauer starten zwar ebenfalls den Integrationsvorgang. Dieser Vorgang wird noch vor Erreichen der Triggerschwelle abgebrochen, was ebenso die selbsttätige Rückstellung des Integriergliedes zur Folge hat wie das Ausbleiben des Eingangssignals nach Erreichen der Triggerschwelle.

Der Verzögerungsschaltung 17 ist die Nachlaufschaltung 18 nachgeschaltet, die nach dem Ausbleiben des Ausgangssignals der Verzögerungsschaltung 17 noch für eine wählbare Zeitspanne ihr Ausgangssignal aufrecht erhält. Diese Nachlaufzeit kann relativ kurv gewählt werden, da sie nur dazu dient, Schwingungs- oder Flattererscheinungen zu unterdrücken, welche durch die Näherungsschalter ausgelöst werden können, während sich deren Fahne aus dem Schaltbereich herausbewegt. Im Ausführungsbeispiel liegt diese Verzögerung- oder Nachlaufzeit im Bereich zwischen 50 und 100 msec.

Jeder Nachlaufschaltung 18 ist die Endstufe 19 nachgeschlatet, an welche die Erregerwicklung des zugeordneten Ventils 5 angeschlossen ist.

Eine Abweichung des Niveaus vom Sollwert nach unten hat ein Signal desjenigen Aufnehmers 14 zur Folge, dem das in der zur Pumpe 4 führenden Leitung liegende erste Sitzventil 5 zugeordnet ist. Bleibt diese Niveauabweichung über einen Zeitraum vorhanden, der mindestens gleich der Verzögerungszeit der Verzögerungsschaltung 17 ist, dann öffnet das erste Sitzventil 5, wodurch die Pumpe 4 Druckmittel in den Hydraulikzylinder preßt, wodurch dieser die Karosserie soweit anhebt, bis der Sollwert des Niveaus wieder erreicht ist. Entsprechend hat eine Niveauabweichung nach oben, die mindestens für eine der Verzögerungszeit der Verzögerungsschaltung 17 entsprechende Zeitspanne vorhanden ist, das Öffnen des zweiten Sitzventils 7 zur Folge, wodurch Druckmittel aus dem Hydraulikzylinder in den Tank 6 abfließt und die Karosserie bis auf den Sollwert des Niveaus abgesenkt wird.

Einer allen Signalverarbeitungsstufen 16 gemeinsamen elektronischen Logikschaltung 20 werden die Ausgangssignale aller derjenigen Aufnehmer 14 zugeführt, die auf einer der beiden Wagenseiten angeordnet sind und deshalb auf eine Neigung der Karosserie ansprechen, wie sie insbesondere bei einer Kurvenfahrt auftritt. Die Verzögerungszeit der diesen Aufnehmern 14 nachgeschalteten Verzögerungsschaltungen 17 ist durch Signale der Logigschaltung 20 veränderbar. Stellt die Logikschaltung 20 auf Grund gegenläufiger Niveauabweichungen auf den beiden Fahrzeugseiten fest, daß eine Neigung der Karosserie relativ zu den Achsen aufgetreten ist, dann wird durch entsprechende Ausgangssignale die Verzögerungszeit der Verzögerungsschaltungen 17 verkürzt, vorzugsweise bis auf den Wert Null. Die Hydraulikzylinder 1 und 1' können dann ohne Zeitverzögerung die Neigung der Karosserie beseitigen. Die Logikschaltung 20 kann sogar so programmiert sein, daß in diesem Falle eine gewisse Neigung der Karosserie im entgegengesetzten Sinne, bei einer Kurvenfahrt also nach innen, eingestellt wird. Sobald die die Karosserie zu neigen suchenden Kräfte entfallen, was am Ende einer Kurvenfahrt der Fall ist, erhöht die Logikschaltung 20 die Verzögerungszeit der Verzögerungsschaltungen 17 wieder auf ihren normalen Wert.

Die Logikschaltung 20 steuert ferner die zusätzlichen Sitzventile 12, mittels denen die Dämpfung der hydropneumatischen Federung verändert werden kann. Sind die Sitzventile 12 geöffnet, dann ist diese Dämpfung vermindert. Im Ausführungsbeispiel hält die Logikschaltung 20 die Sitzventile 12 nur während der Kurvenfahrt geschlossen, um dabei eine höhere Dämpfung als bei einer Geradeausfahrt zu haben.

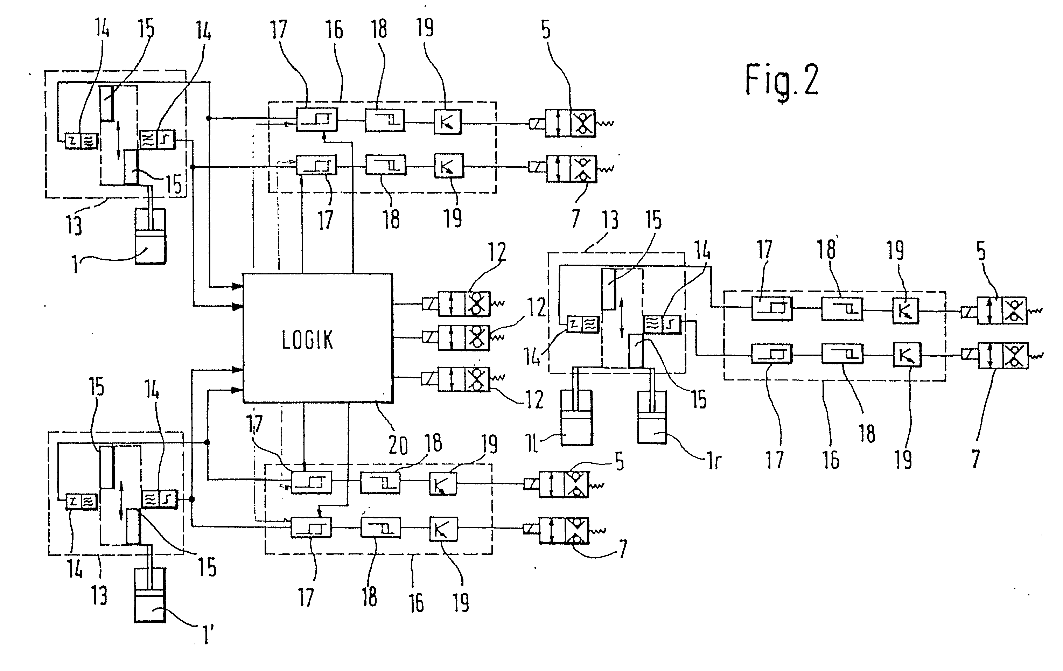

Um nach einem vorausgegangenen völligen Absenken der Karosserie, beispielsweise bei einem Lastfahrzeug zum Zwecke des leichteren Beladens, die Ladefläche nach dem Beladen wieder gleichmäßig auf das Normalniveau anzuheben, selbst wenn die eine Seite der Ladefläche eine größeren Teil der Last als die andere zu tragen hat, ist in der Logikschaltung 20 eine Steuerschaltung enthalten, von der je eine Steuerleitung zum Eingang jeder der Verzögerungsschaltungen 17 führt. In Figur 2 sind aus Gründen der Übersichtlichkeit diejenigen beiden Steuerleitungen nicht dargestellt, welche von der Logikschaltung 20 zu den den Hydraulikzylindern 1l und 1r zugeordneten Verzögerungsschaltungen 17 führen. Es wäre zwar möglich, mit den Schaltbefehlen der Steuerschaltung unmittelbar die Endstufe 19 zu beaufschlagen. Da jedoch die Logikschaltung 20 die Verzögerungszeit der Verzögerungsschaltungen 17 zu steuern vermag, ist eine Ansteuerung der Verzögerungsschaltungen 17 mit den Schaltbefehlen der Steuerschaltung vorteilhafter.

Für ein schrittweises Anheben des Niveaus im Wechsel auf der einen und anderen Fahrzeugseite bewirkt die Steuerschaltung, daß im Wechsel die Sitzventile 5, welche die Hydraulikzylinder 1 und 1l mit der Pumpe 4 verbinden können, und die Sitzventile 5, welche die Hyraulikzylinder 1' und 1r mit der Pumpe 4 verbinden können, für eine fest vorgegebene oder wählbare Zeit von beispielsweise 0,5 Sekunden geöffnet werden. Durch dieses Schalten der Ventile im Wechsel wird verhindert, daß sich das Niveau auf der weniger stark belasteten Seite schneller anhebt als auf der weniger belasteten Seite, falls die Belastung ungleichmäßig ist. Vielmehr wird durch das wechselweise, kurzzeitige Öffnen der Ventile 5 die Karosserie gleichmäßig schrittweise bis zum Erreichen des Sollniveaus angehoben. Sollten am Ende dieses Hebevorgangs noch Niveauunterschiede vorhanden sein, dann werden diese anschließend durch die Niveauregelung ausgeglichen. Mit Hilfe einer derartigen Steuerschaltung, welche unter Mitwirkung der Logikschaltung 20 ein verzögerungsfreies Schalten der Ventile ermöglicht, wird ein weitgehender Gleichlauf der Zylinder ohne eine besondere hydraulische Gleichlaufeinrichtung erreicht.

Da sich mit der Steuerschaltung auch diejenigen Verzögerungsschaltungen ansteuern lassen, denen die Sitzventile 7 nachgeschaltet sind, ist mit der Steuerschaltung auch ein gleichmäßiges, schrittweises Absenken des Niveaus bei ungleicher Karosseriebelastung möglich. Hierzu brauchen nur die Ventile 7 im Wechsel jeweils für die gewählte Zeitspanne geöffnet zu werden.

**Patentansprüche**

1. Einrichtung zum Regeln des Niveaus der von hydropneumatischen Federungszylindern getragenen Teile eines Kraftfahrzeuges mit folgenden Merkmalen:
   - die Federungszylinder (1, 1', 1r, 1l) sind über Magnetventile (5,7) mit einer Druckquelle (4) bzw. einem Sammelbehälter (6) verbunden,
   - die Magnetventile (5, 7) werden aufgrund von Signalen von Niveausensoren (13) angesteuert,
   - jeder Niveausensor (13) besteht aus zwei Schaltern (14, 15), von denen der eine beim Überschreiten eines oberhalb eines Sollwertes und der andere beim Unterschreiten eines unterhalb dieses Sollwertes liegenden Schaltschwelle ein Signal abgibt,
   - die Signale der Niveausensoren (13) werden einer Signalverarbeitungsstufe (16) zugeführt,
   - die Signalverarbeitungsstufe (16) erzeugt nach Ablauf einer Verzögerungszeit ein Ausgangssignal zur Ansteuerung der Magnetventile (5, 7),
   gekennzeichnet durch eine Nachlaufschaltung (18) der Signalrer arbeitungsstufe (16), die beim Wegfall der Signale der Niveausensoren (13) beim Überschreiten der unteren bzw. beim Unterschreiten der oberen Schaltschwelle das Ausgangssignal noch für eine vorgegebene Nachlaufzeit aufrecht erhält.

2. Einrichtung nach Anspruch 1, dadurch gekennzeichnet, daß die Magnetventile (5, 7) als Sitzventile ausgebildet sind.

3. Einrichtung nach Anspruch 2, dadurch gekennzeichnet, daß jedem Federungszylinder (1, 1', 1r, 1l) wenigstens zwei Sitzventile (5, 7, 12) zugeordnet sind.

4. Einrichtung nach einem der Ansprüche 1 bis 3, dadurch gekennzeichnet, daß die Schalter (14, 15) als Näherungsschalter ausgebildet sind.

5. Einrichtung nach einem der Ansprüche 1 bis 4, dadurch gekennzeichnet, daß die Verzögerungszeit einige Sekunden, vorzugsweise 5 bis 7 s beträgt.

6. Einrichtung nach einem der Ansprüche 1 bis 5, dadurch gekennzeichnet, daß die Nachlaufzeit wesentlich kürzer als die Verzögerungszeit ist und vorzugsweise im Bereich von 50 ms bis 100 ms liegt.

7. Einrichtung nach einem der Ansprüche 1 bis 6, dadurch gekennzeichnet, daß für eine Fahrzeugstabilisierung bei Kurvenfahrt auf beiden Fahrzeugseiten wenigstens ein Niveausensor (13) und wenigstens ein Federungszylinder (1, 1', 1r, 1l) angeordnet ist.

8. Einrichtung nach einem der Ansprüche 1 bis 7, gekennzeichnet durch eine Logikschaltung (20) mit Eingängen für die Signale wenigstens der den beiden Fahrzeugseiten zugeordneten Niveausensoren (13) und Signalausgängen, die zur Beeinflussung der Signalverarbeitungsstufe (16) mit dieser verbunden sind.

9. Einrichtung nach Anspruch 8, dadurch gekennzeichnet, daß die Verzögerungszeit und/oder die Nachlaufzeit mittels der Signale der Logikschaltung (20) veränderbar, insbesondere verkürzbar, sind.

10. Einrichtung nach Anspruch 8 oder 9, dadurch gekennzeichnet, daß die die Federungszylinder (1, 1', 1r, 1l) steuernden Ventile (5, 7, 12) als Schnellschaltventile ausgebildet sind.

11. Einrichtung nach einem der Ansprüche 8 bis 10, gekennzeichnet durch von der Logikschaltung (20) ansteuerbare, zusätzliche Magnetventile, welche den Magnetventilen (5, 7) in den Zuflußleitungen und den Abflußleitungen zumindest der den beiden Fahrzeugseiten zugeordneten Federungszylinder (1, 1', 1r, 1l) parallel geschaltet sind.

12. Einrichtung nach einem der Ansprüche 1 bis 11, gekennzeichnet durch eine von der Logikschaltung (20) aus veränderbare Dämpfung der Kolbenbewegung der Federungszylinder (1, 1', 1r, 1l) mit Hilfe von mittels der Logikschaltung (20) steuerbaren Magnetventile (12) in den Verbindungsleitungen zwischen den Federungszylindern (1, 1', 1r, 1l) und dem zugeordneten Federspeicher (9).

13. Einrichtung nach einem der Ansprüche 1 - 12, gekennzeichnet durch eine vorzugsweise in der Logikschaltung (20) enthaltene Steuerschaltung, welche im Wechsel diejenigen Ventile (5) für eine vorzugsweise wählbare Zeitspanne im Sinne des Öffnens ansteuert, die bei einer Niveauanhebung durch die wenigstens einer der Achsen zugeordneten Hydraulikzylinder (1, 1' 1l, 1r) zu öffnen sind.

14. Einrichtung nach Anspruch 13, dadurch gekennzeichnet, daß die bei einer Niveauabsenkung wenigstens mittels der der einen Achse zugeordneten Hydraulikzylinder (1, 1') zu öffnenden Ventile (7) mittels der Steuerschaltung im Wechsel schaltbar sind.

15. Einrichtung nach Anspruch 13 oder 14, dadurch gekennzeichnet, daß alle für eine Niveauanhebung und/oder Niveauabsenkung erforderlichen Ventile (5, 7) mittels der Steuerschaltung im Wechsel für eine schrittweise Niveauanhebung oder Niveauabsenkung schaltbar sind.

## Claims

1. Device for regulating the level of the parts of a motor vehicle supported by hydropneumatic suspension cylinders, with the following features:
   - the suspension cylinders (1, 1', 1r, 1l) are connected by way of solenoid valves (5, 7) to a pressure source (4) or a reservoir (6),
   - the solenoid valves (5, 7) are controlled on the basis of signals from level sensors (13),
   - each level sensor (13) consists of two switches (14, 15), whereof one emits a signal on exceeding a switching threshold lying above a reference value and the other emits a signal on falling below a switching threshold lying below this reference value,
   - the signals of the level sensors (13) are supplied to a signal-processing stage (16),
   - after the expiration of a delay, the signal-processing stage (16) produces an output signal for controlling the solenoid valves (5, 7),
   - characterised by a follow-up circuit (18) of the signalprocessing stage (16), which upon the cessation of the signals from the level sensors (13), upon exceeding the lower switching threshold or upon falling below the upper switching threshold, maintains the output signal for a predetermined follow-up time.

2. Device according to Claim 1, characterised in that the solenoid valves (5, 7) are constructed as seated valves.

3. Device according to Claim 2, characterised in that associated with each suspension cylinder (1, 1', 1r, 1l) are at least two seated valves (5, 7, 12).

4. Device according to one of Claims 1 to 3, characterised in that the switches (14, 15) are constructed as proximity switches.

5. Device according to one of Claims 1 to 4, characterised in that the delay time amounts to a few seconds, preferably five to seven seconds.

6. Device according to one of Claims 1 to 5, characterised in that the follow-up time is substantially shorter than the delay time and is preferably in a range of 50 msecs to 100 msecs.

7. Device according to one of Claims 1 to 6, characterised in that for stabilising the vehicle when travelling around bends, at least one level sensor (13) and at least one suspension cylinder (1, 1', 1r, 1l) is located on both sides of the vehicle.

8. Device according to one of Claims 1 to 7, characterised by a logic circuit (20) with inputs for the signals at least of the level sensors (13) associated with the two sides of the vehicle and signal outputs, which for influencing the signal-processing stage (16), are connected to the latter.

9. Device according to Claim 8, characterised in that the delay time and/or the follow-up time can be varied, in particular can be shortened, by means of the signals from the logic circuit (20).

10. Device according to Claim 8 or 9, characterised in that the valves (5, 7, 12) controlling the suspension cylinders (1, 1', 1r, 1l) are constructed as high-speed switching valves.

11. Device according to one of Claims 8 to 10, characterised by additional solenoid valves, which can be controlled by the logic circuit (20), which are connected in parallel with the solenoid valves (5, 7) in the inlet pipes and the discharge pipes at least of the suspension cylinders (1, 1', 1r, 1l) associated with the two sides of the vehicle.

12. Device according to one of Claims 1 to 11, characterised by a damping of the piston movement of the suspension cylinders (1, 1', 1r, 1l), which can be varied by the logic circuit (20), by means of solenoid valves (12) in the connecting lines between the suspension cylinders (1, 1', 1r, 1l) and the associated spring-operating mechanism (9), which solenoid valves (12) can be controlled by means of the logic circuit (20).

13. Device according to one of Claims 1 to 12, characterised by a control circuit preferably contained in the logic circuit (20), which alternately controls those valves (5) for a time interval which can preferably be chosen, in the opening direction, which are to be opened in the case of a rise of level due to the hydraulic cylinders (1, 1', 1l, 1r) associated with at least one of the axles.

14. Device according to Claim 13, characterised in that the valves (7) to be opened in the case of a drop in the level at least by means of the hydraulic cylinders (1, 1') associated with one axle, can be controlled alternately by means of the control circuit.

15. Device according to Claim 13 or 14, characterised in that all the valves (5, 7) necessary for a rise of level and/or drop of level can be controlled by means of the control circuit alternately for a gradual rise of level or drop of level.

## Revendications

1. Dispositif pour régler le niveau des composants d'un véhicule automobile, notamment d'un camion, supportés par des cylindres d'amortissement ou de suspension hydropneumatiques; dans lequel :

- les cylindres d'amortissement ou de suspension (1, 1', 1r, 1l) sont reliés à une source de fluide sous pression (4) ou à un réservoir (6) par l'intermédiaire de valves électromagnétiques (5, 7);
- les valves électromagnétiques (5, 7) sont commandées par des signaux émanant de capteurs ou de senseurs de niveau (13);
- chaque capteur de niveau (13) comprend deux commutateurs ou contacteurs (14, 15) dont l'un délivre un signal lorsqu'un certain seuil est dépassé en plus, tandis que l'autre délivre un signal lorsque le niveau est dépassé en moins;
- les signaux des capteurs de niveau (13) sont appliqués à un circuit de traitement de signaux (16);
- le circuit de traitement de signaux (16) engendre à la fin d'un certain délai, un signal de sortie qui commande les valves électromagnétiques (5, 7);

caractérisé en ce qu'il comprend, dans l'étage de traitement de signaux (16), un circuit de temporisation (18) qui, en l'absence des signaux des capteurs de niveau (13), maintient le signal de sortie lors du dépassement en plus du seuil inférieur ou lors du dépassement, en moins, du seuil supérieur.

2. Dispositif selon la revendication 1, caractérisé en ce que les valves électromagnétiques (5, 7) sont des soupapes à clapet.

3. Dispositif selon la revendication 2, caractérisé en ce que chaque cylindre de suspension (1, 1', 1r, 1l) est associé à, au moins, deux valves (5, 7, 12).

4. Dispositif selon l'une quelconque des revendications 1 à 3, caractérisé en ce que les commutateurs (14, 15) sont des contacts de proximité.

5. Dispositif selon l'une quelconque des revendications 1 à 4, caractérisé en ce que le délai de retard s'élève à quelques secondes et, de préférence, est compris entre 5 à 7 secondes.

6. Dispositif selon l'une quelconque des revendications 1 à 5, caractérisé en ce que le temps de temporisation est sensiblement plus court que le délai de retard et, de préférence, se situe entre 50msec et 100msec.

7. Dispositif selon l'une quelconque des revendications 1 à 6, caractérisé en ce que, afin de stabiliser le véhicule dans les virages, celui-ci comporte des deux côtés, au moins, un capteur de niveau (13) et, au moins, un cylindre d'amortissement (1, 1', 1r, 1l).

8. Dispositif selon l'une quelconque des revendications 1 à 7, caractérisé en ce qu'un circuit logique (20) qui reçoit, au moins, les signaux des capteurs de niveau (13) affectés aux deux côtés du véhicule, et dont les signaux de sortie sont appliqués à l'étage de traitement de signaux (16).

9. Dispositif selon la revendication 8, caractérisé en ce que le délai de retard et/ou le temps de temporisation peuvent être modifiés, notamment abrégés, au moyen des signaux du circuit logique (20).

10. Dispositif selon la revendication 8 ou 9, caractérisé en ce que les valves (5, 7, 12) qui commandent les cylindres d'amortissement (1, 1', 1r, 1l) sont des valves à action rapide.

11. Dispositif selon l'une quelconque des revendications 8 à 10, caractérisé en ce qu'il comprend des valves électromagnétiques supplémentaires, pouvant être commandées par le circuit logique (20), qui sont branchées en parallèle sur les valves électromagnétiques (5, 7) intercalées dans les tuyauteries d'arrivée et de départ des cylindres de suspension (1, 1', 1r, 1l) montés sur les deux côtés du véhicule, au moins.

12. Dispositif selon l'une quelconque des revendications 1 à 11, caractérisé par des moyens pour amortir de façon variable le mouvement des pistons des cylindres d'amortissement (1, 1', 1r, 1l) à partir du circuit logique (20) grâce à des valves électromagnétiques (12) pouvant être commandées par le circuit logique intercalées dans les tuyauteries reliant les cylindres (1, 1', 1r, 1l) et le réservoir correspondant (9).

13. Dispositif selon l'une quelconque des revendications 1 à 12, caractérisé en ce qu'il comprend un circuit de commande, de préférence, incorporé dans le circuit logique (20), qui active alternativement pendant une période de temps, de préférence, variable, dans le sens de l'ouverture, celles des valves qui doivent être ouvertes en réponse à l'élévation du niveau de l'un, au moins, des cylindres hydrauliques (1, 1', 1l, 1r) associés aux essieux du véhicule.

14. Dispositif selon la revendication 13, caractérisé en ce que, lorsque le niveau baisse, au moins, les valves devant être ouvertes (7) des cylindres hydrauliques (1, 1') associés à l'un des essieux, peuvent être activées alternativement au moyen du circuit de commande.

15. Dispositif selon la revendication 13 ou 14, caractérisé en ce que toutes les valves (5,7) nécessaires pour élever ou pour abaisser le niveau peuvent être activées alternativement, au moyen du circuit de commande, de façon à faire monter ou descendre le niveau pas à pas.

# Fig.1

Fig.2

EP 0 249 207 B1